# DEMANDE DE BREVET EUROPEEN

(11) **EP 0 560 649 A1**
(43) Date de publication de la demande: **15.09.1993**
(21) Numéro de dépôt: 93400536.4
(22) Date de dépôt: 02.03.1993
(51) Int. Cl.: B64C 25/20

(54) **Atterrisseur relevable à raccourcissement de jambe**

(30) Priorité: 11.03.1992 FR 9202921
(71) Demandeur: MESSIER BUGATTI, F-78140 Velizy Villacoublay (FR)
(72) Inventeur: Robin, Daniel, F-92120 Montrouge (FR); Poiret, Alain, F-75013 Paris (FR); Woerner, Pierre, F-92260 Fontenay Aux Roses (FR)
(74) Mandataire: Jaunez, Xavier

(57) **Abrégé**

L'invention concerne un atterrisseur relevable à raccourcissement de jambe, comportant un amortisseur équipé d'une tige plongeuse, et un système articulé reliant cette tige plongeuse au caisson de l'amortisseur, en étant commandé par une bielle élastique à seuil, de façon à tirer l'amortisseur lors du relevage de la jambe.

Conformément à l'invention, le système articulé (230) comporte deux bras (240,250) formant un alignement, avec un premier bras (240) articulé sur la tige plongeuse (205) et présentant un appendice latéral (245) dont l'extrémité libre (246) peut coopérer avec une came fixe (260) solidaire de la structure d'avion, et un second bras (250) articulé sur le caisson (203). L'appendice latéral (245) et la came fixe (260) sont agencés pour intervenir en sécurité, en cas de défaillance de la bielle à seuil (225), en assurant la sortie de l'amortisseur et le verrouillage dudit amortisseur allongé en position train bas.

## Description

La présente invention concerne les atterrisseurs de trains d'atterrissage d'aéronefs, et plus particulièrement les atterrisseurs du type à raccourcissement de jambe.

Il est connu de réaliser des atterrisseurs relevables à raccourcissement qui comportent une jambe articulée sur une structure d'avion, constituée d'un caisson dans lequel est logé un amortisseur se composant principalement d'une tige coulissante et d'une'tige plongeuse d'amortisseur, ainsi qu'un système articulé reliant cette tige plongeuse au caisson en étant commandé par une bielle élastique à seuil fixée sur la structure d'avion, de façon à tirer l'amortisseur lors du relevage de la jambe et à repousser ledit amortisseur lors de la descente de ladite jambe.

Cette disposition permet d'obtenir un atterrisseur qui est long en position train bas, et court en position train haut (facilitant alors son intégration dans le logement associé de l'avion).

Une autre approche possible, pour obtenir le même résultat, consiste à utiliser des atterrisseurs à rehaussement dont la structure permet, lorsque l'avion est à l'arrêt au sol, de générer un effort équivalent à la charge statique, afin de relever le caisson de l'amortisseur par rapport à la tige coulissante.

La première approche, qui est celle de l'atterrisseur selon l'invention, consiste à utiliser un atterrisseur à raccourcissement de jambe du type précité, dont le système articulé est agencé pour allonger la jambe de train lors de la descente de l'atterrisseur, avant même que les roues ne touchent le sol : l'allongement est alors intrinsèquement commandé par la structure, sans que le pilote n'ait à déclencher un quelconque mécanisme, contrairement aux atterrisseurs à rehaussement.

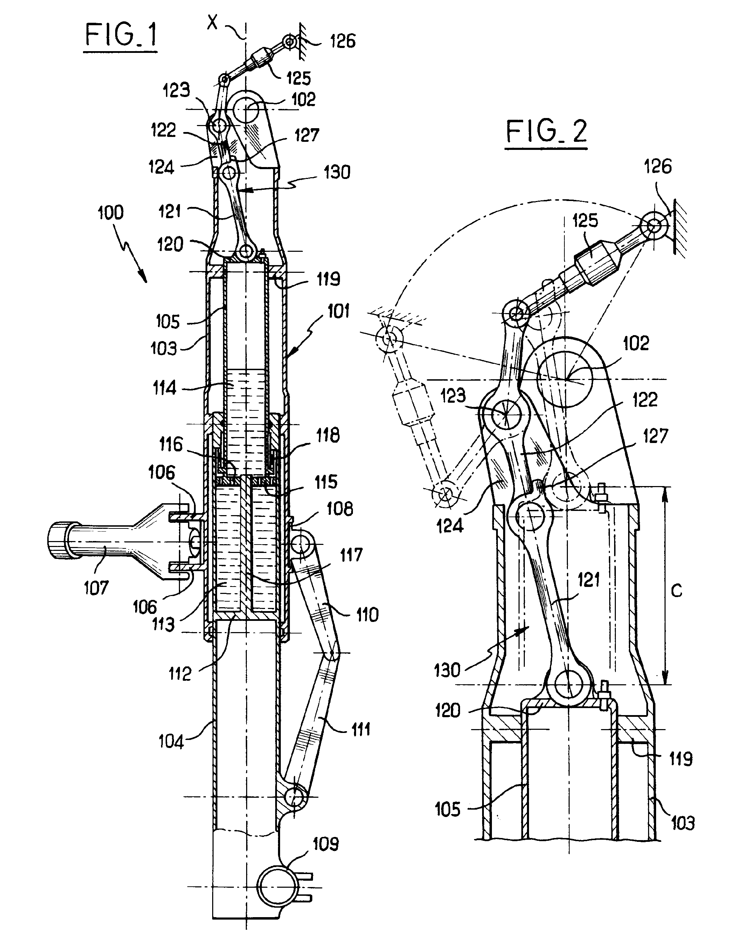

On a illustré aux figures 1 et 2 un atterrisseur connu à raccourcissement de jambe, conforme à la définition donnée plus haut.

La coupe axiale de la figure 1 illustre ainsi un atterrisseur relevable 100 comportant une jambe 101 articulée selon un axe 102 à une structure d'avion, et comportant un caisson 103 et une tige coulissante 104 équipée d'une tige plongeuse d'amortisseur 105, coaxialement à l'axe X du caisson. Le caisson 103 présente en partie inférieure des chapes 106 permettant l'articulation de deux vérins 107 commandant l'orientation du train de roues, la tige de ces vérins étant reliée à un manchon tournant 108 coaxial au caisson. La tige coulissante 104 porte inférieurement un train de roues (dont on distingue seulement l'axe 109), et est reliée au caisson 103 par un compas à deux bras 110,111. La tige coulissante 104 comporte en outre un fond (cloison intermédiaire) 112 qui délimite une chambre inférieure de fluide hydraulique 113 communiquant, par l'intermédiaire d'un diaphragme, avec une chambre supérieure de fluide hydraulique 114 intérieure à la tige plongeuse 105. La tige plongeuse 105 comporte inférieurement un fond 115 muni de trous 116 (pour la fonction diaphragme précitée), et traversé en son centre par une tige 117 solidaire du fond 112 de la tige coulissante 104. Un système 118 de cames hélicoïdales homologues, respectivement solidaires de la tige coulissante 104 et de la tige plongeuse 105, assurent le recentrage et le maintien du calage angulaire respectif.

Un système articulé 130 permet de tirer l'amortisseur, sans le comprimer, lorsque la tige plongeuse 105 est tirée (vers l'axe d'articulation de la jambe) lors du relevage de la jambe d'atterrisseur, ou d'allonger la jambe lorsque la tige plongeuse 105 est repoussée par ce système articulé (lors de la descente de la jambe d'atterrisseur), conformément à la position illustrée en figure 1. La tige plongeuse 105 coulisse en ef- fetdans un palier 119 ménagé en partie haute du caisson 103, et son fond supérieur 120 est relié au système articulé 130.

Ce système articulé 130 comporte un bras 121 articulé inférieurement sur la tige plongeuse 105, et supérieurement en extrémité d'un levier 122 lui-même articulé en 123 sur un axe porté par des goussets 124 du caisson. L'autre extrémité du levier 122 est quant à elle articulée sur une bielle élastique à seuil (ou bielle à ressort) 125 qui est articulée sur une structure 126 de l'avion. La position verrouillée du système articulé 130 est assurée par le maintien, grâce à la bielle élastique à seuil 125, des deux bras d'alignement dans une position de butée (par un ergot associé 127 du bras 121) qui est légèrement désalignée selon une brisure opposée à celle du relevage.

La figure 2 illustre, à plus grande échelle, la zone supérieure de l'atterrisseur 100 précité, concernant ce système articulé, avec la position relative train bas à jambe allongée (en trait continu), et la position relative train haut à jambe raccourcie (en traits mixtes), conformément au principe de raccourcissement intrinsèque. La course d'allongement ou de raccourcissement obtenue est notée c.

Un tel atterrisseur donne entière satisfaction dans des conditions normales de fonctionnement. Cependant, si la bielle élastique à seuil est déficiente, le fonctionnement normal devient affecté.

Ainsi, si cette bielle vient à être cassée lorsque l'atterrisseur est en position train haut ou en cours de descente, la sortie de l'atterrisseur est affectée dans la mesure où l'allongement de la jambe ne se produit plus normalement. De plus, en position train bas, on n'a plus le verrouillage positif de l'alignement du système articulé, et cet alignement peut alors se briser à l'impact lorsque les roues touchent le sol, ce qui produirait un escamotage vertical de l'amortisseur.

L'invention vise précisément à résoudre ce problème, en concevant un atterrisseur à raccourcissement de jambe qui est capable de fonctionner en sécurité en cas de défaillance de la bielle élastique à seuil.

L'invention a ainsi pour objet de réaliser un atterrisseur à raccourcissement de jambe dont la structure permet d'éviter les inconvénients précités, et en particulier de faire face à une situation de bielle élastique à seuil cassée.

Il s'agit plus particulièrement d'un atterrisseur relevable à raccourcissement de jambe, comportant une jambe articulée sur une structure d'avion, constituée d'un caisson dans lequel est logé un amortisseur se composant principalement d'une tige coulissante et d'une tige plongeuse d'amortisseur, ainsi qu'un système articulé reliant cette tige plongeuse au caisson en étant commandé par une bielle élastique à seuil fixée à la structure d'avion, de façon à tirer l'amortisseur lors du relevage de la jambe et à repousser ledit amortisseur lors de la descente de ladite jambe, caractérisé en ce que le système articulé comporte deux bras formant un alignement, avec un premier bras articulé sur la tige plongeuse d'amortisseur et présentant un appendice latéral dont l'extrémité libre peut coopérer avec une came fixe solidaire de la structure d'avion, et un second bras articulé sur le caisson, ainsi qu'un levier solidaire en rotation de ce second bras et relié à la bielle à seuil, ledit appendice latéral et ladite came fixe étant agencés pour intervenir en sécurité en assurant la sortie de l'amortisseur et le verrouillage dudit amortisseur en position train bas.

Selon un mode d'exécution particulier, l'appendice latéral du premier bras est agencé au voisinage de l'articulation entre les deux bras, et cet appendice s'étend dans le plan de l'alignement formé par les deux bras, dans une direction sensiblement perpendiculaire à la direction générale du premier bras.

Avantageusement, l'extrémité libre de l'appendice latéral du premier bras est pourvue d'un galet qui roule sur la came fixe lors d'une intervention en sécurité.

Conformément à un autre mode d'exécution particulier, la came fixe comporte successivement une première portion servant à assurer le début de la sortie de l'amortisseur, et une seconde portion formant butée positive pour assurer le verrouillage dudit amortisseur en position train bas lors du contact avec le sol. En particulier, la première portion de la came fixe peut être de forme générale concave, tandis que la seconde portion de ladite came est de forme générale convexe.

Selon une autre caractéristique possible, le second bras et le levier qui lui est couplé sont disposés de part et d'autre d'un appendice du caisson associé à leur articulation sur ledit caisson. En particulier, le second bras et le levier associé peuvent s'étendre d'un même côté de leur articulation.

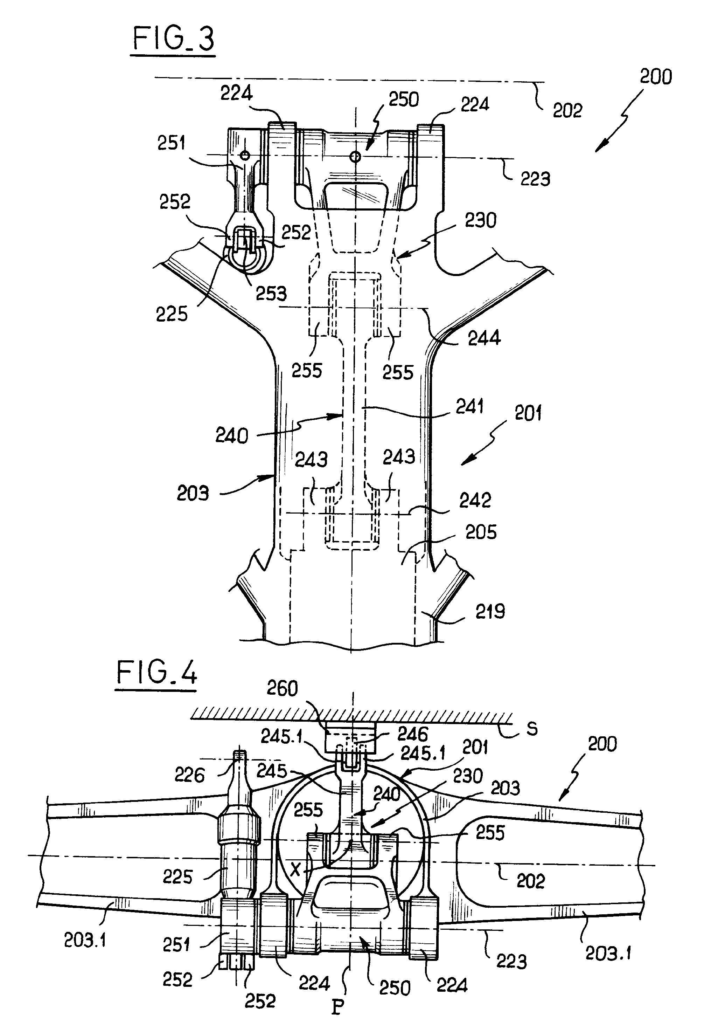

D'autres caractéristiques et avantages de l'invention apparaîtront plus clairement à la lumière de la description qui va suivre et des dessins annexés, concernant un mode de réalisation particulier, en référence aux figures 3 à 8, où :
- les figures 3 et 4 sont des vues en élévation et de dessus de la zone supérieure d'un atterrisseur à raccourcissement de jambe conforme à l'invention (en position train bas), la zone inférieure de cet atterrisseur pouvant quant à elle être identique ou analogue à celle de l'atterrisseur connu précédemment décrit en regard des figures 1 et 2 ;

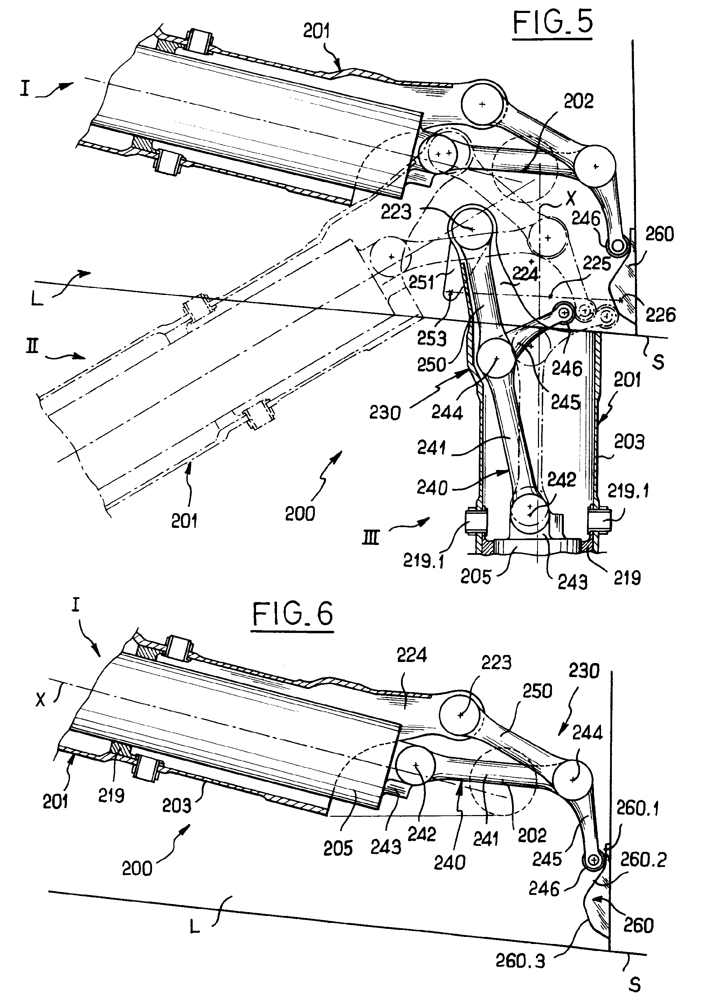

- la figure 5 est une vue de l'atterrisseur à raccourcissement de jambe conforme à l'invention, dans trois positions remarquables, à savoir la position train haut, la position train bas, et une position intermédiaire, lors du fonctionnement normal, avec en outre une position de verrouillage train bas (en traits mixtes) dans une situation de bielle élastique à seuil déficiente ;
- les figures 6 à 8 illustrent séparément les trois positions remarquables précitées.

Les figures 3 et 4 illustrent un atterrisseur 200 à raccourcissement de jambe conforme à l'invention, en position train bas, la représentation étant limitée à la zone supérieure de cet atterrisseur, étant entendu que la zone inférieure pourra être identique ou analogue à celle de l'atterrisseur 100 précédemment décrit en référence aux figures 1 et 2.

On distingue sur les figures 3 et 4 une jambe 201 articulée selon un axe 202 à une structure d'avion S, et constituée d'un caisson 203 dans lequel est logé un amortisseur se composant principalement d'une tige coulissante (non visible ici) et d'une tige plongeuse d'amortisseur 205. La tige plongeuse 205 coulisse dans un palier 219 solidaire du caisson 203, ledit palier étant ici monté dans le caisson par des pions d'accrochage 219.1, ainsi que cela est visible sur la figure 5. Le caisson d'amortisseur 203 se prolonge supérieurement par des bras 203.1 qui se terminent au niveau des articulations associées à l'axe 202 d'articulation de la jambe d'atterrisseur, conformément aux structures conventionnelles.

Conformément à un aspect essentiel de l'invention, l'atterrisseur 200 comporte un système articulé 230 constitué par deux bras 240 et 250 formant un alignement, avec un premier bras 240 articulé sur la tige plongeuse d'amortisseur 205 et présentant un appendice latéral 245 dont l'extrémité libre 246 peut coopérer avec une came fixe 260 solidaire de la structure d'avion S, et un second bras 250 articulé sur le caisson 203, ainsi qu'un levier251 solidaire en rotation de ce second bras 250 et relié à une bielle à seuil 225, l'appendice latéral 245 et la came fixe 260 étant agencés pour intervenir en sécurité en assurant la sortie de l'amortisseur et le verrouillage dudit amortisseur (repoussé) en position train bas, ainsi que cela sera expliqué ci-après plus en détail en référence aux figures 5 à 8.

Le premier bras 240 comporte un bras d'alignement 241, qui est articulé en son extrémité inférieure en 242 sur la tige plongeuse 205, en étant ici maintenu entre deux appendices 243 de ladite tige plongeuse. Ce bras d'alignement 241 est articulé en 244 avec le second bras 250, l'extrémité supérieure de ce bras d'alignement 241 étant ici reçue entre deux appendices inférieurs 255 de ce second bras 250. Le second bras 250 de l'alignement est quant à lui articulé en 223 sur deux appendices associés 224 du caisson 203.

Le second bras 250 et le levier 251 qui lui est couplé sont ici disposés de part et d'autre de l'un des appendices 224 du caisson 203, en s'étendant d'un même côté de leur articulation 223, ce qui n'est naturellement nullement obligatoire (on pourrait en effet reprendre un agencement analogue à celui de l'at- terrissur connu illustré aux figures 1 et 2, auquel cas le second bras 250 et le levier 251 s'étendraient de part et d'autre de l'articulation 223), mais permet cependant d'avoir une structure particulièrement compacte. Le levier 251 se termine en son extrémité libre par deux branches 252 recevant une des extrémités 253 de la bielle à seuil 225. L'autre extrémité de cette bielle élastique à seuil 225 est articulée en 226 sur la structure de l'avion. Il convient de noter que la bielle à seuil 225 a été seulement schématisée en traits mixtes sur la figure 5, et que les figures 6 à 8, qui illustrent séparément trois positions remarquables de l'atterrisseur à raccourcissement de jambe selon l'invention, ne montrent pas cette bielle à seuil et le levier associé, pour des raisons de clarté.

L'appendice latéral 245 du premier bras 240 est ici agencé au voisinage de l'articulation 244 entre les deux bras 240 et 250 de l'alignement, ce qui ne constitue naturellement qu'un mode d'exécution particulier. Plus précisément, cet appendice latéral 245 s'étend dans le plan de l'alignement formé par les deux bras 240 et 250 (ce plan P est mieux visible sur la figure 4), dans une direction sensiblement perpendiculaire à la direction générale du premier bras 240, ainsi que cela est mieux visible sur les figures 5 à 8. Les appendices 255 précités assurent l'orientation de l'appendice latéral dans le plan P, de façon que l'extrémité dudit appendice soit toujours correctement positionnée par rapport à la came fixe 260. Le premier bras 240 a ainsi une forme de levier coudé, dont une branche constitue une portion de l'alignement du système à raccourcissement de jambe. De préférence, l'appendice latéral 245 se termine en son extrémité libre par deux branches 245.1 entre lesquelles est disposé un galet 246 qui peut rouler sur la came fixe 260 lors d'une intervention en sécurité, ainsi que cela va être décrit ci-après.

On va maintenant décrire le mode de fonctionnement de l'atterrisseur 200 en se référant aux figures 5 à 8, tout d'abord dans le cadre d'un fonctionnement normal, et ensuite lors d'un fonctionnement en sécurité en cas de défaillance de la bielle élastique à seuil, laquelle est d'ailleurs de préférence conçue à double seuil de façon à agir tant en traction qu'en compression.

La figure 5 illustre l'atterrisseur à raccourcissement 200 dans trois positions remarquables, à savoir une position notée qui correspond au train haut (en trait continu), une position notée III correspondant à la position train bas (en trait continu), et une position intermédiaire notée Il (en traits mixtes). La position train bas est en outre complétée avec une illustration en traits mixtes du premier bras pour illustrer le verrouillage obtenu dans une situation de bielle élastique à seuil déficiente.

Les figures 6 à 8 illustrent séparément les trois positions remarquables précitées 1, II, III, sans illustration du levier couplé au second bras ni de la bielle à seuil.

Dans la position I, l'atterrisseur est relevé et logé dans un logement L. L'amortisseur est alors tiré au maximum par sa tige plongeuse 205, et le système articulé formé par le bras d'alignement 241 et le second bras 250 est complètement fermé. Dans cette position, le galet 246 de l'appendice latéral 245 est disposé au voisinage de la came 260, sans toutefois être au contact de celle-ci.

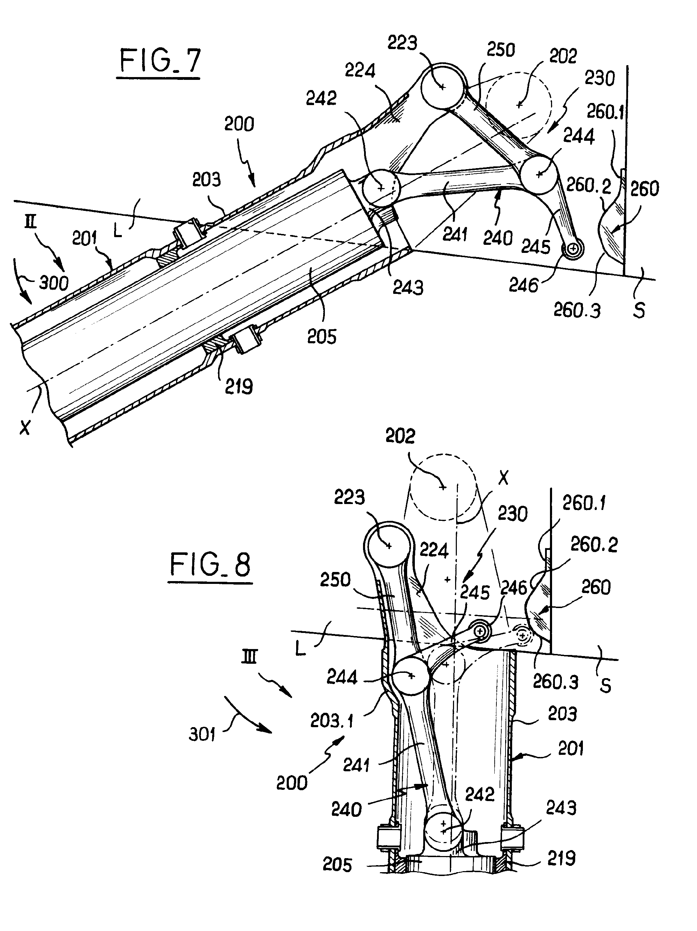

Lors de la descente normale de l'atterrisseur, conformément à la flèche 300 de la figure 7, l'atterrisseur passe à la position II, et la jambe commence à s'allonger par l'action du système articulé 230 sur la tige plongeuse 205. En fonctionnement normal, la bielle élastique à seuil 225 permet ainsi le déploiement correct du système articulé 230 pour allonger progressivement la jambe de l'atterrisseur. Il convient de noter que le galet 246 de l'appendice latéral 245 continue alors à se déplacer en regard de la surface de la came 260, sans contacter cette surface.

Lorsque la descente de l'atterrisseur se poursuit conformément à la flèche 301 de la figure 8, on arrive enfin à la position train bas notée III. Les bras 241 et 250 sont alors sensiblement dans le prolongement l'un de l'autre, formant un alignement (on pourra avoir une position légèrement désalignée selon une brisure opposée à celle du relevage, comme pour l'atterrisseur connu, en prévoyant un ergot associé, par exemple sur le bras d'alignement 241 ). Le galet 246 de l'appendice latéral 245 est alors au niveau d'une autre partie de la surface de came 260, sans être toutefois au contact de celle-ci.

Lors de la remontée de l'atterrisseur, toujours en fonctionnement normal, on passe de la position III à la position I, en passant par la position intermédiaire II, le système articulé 230 se déformant de la même façon que lors de la descente, de façon à raccourcir progressivement la jambe de train jusqu'au raccourcissement maximal en position train haut.

Le fonctionnement qui précède suppose naturellement que la bielle élastique à seuil 225 remplisse sa fonction normalement. En cas de déficience de cette bielle à seuil, l'équipement de l'atterrisseur selon l'invention permet une intervention en sécurité, en assurant d'une part la sortie de l'amortisseur, et d'autre part le verrouillage dudit amortisseur en position train bas.

En cas de rupture de la bielle élastique à seuil 225 en position train haut, l'initiation de la sortie de l'atterrisseur par l'actionneur associé amène en effet immédiatement le galet 246 au contact de la came fixe 260, et plus précisément au contact d'une première portion 260.1 de celle-ci. De ce fait, le passage de la position 1 à la position Il peut être quand même assuré normalement, avec un roulement du galet 246 sur cette portion de came 260.1 qui permet d'assurer la trajectoire jusqu'à ce que les roues sortent du logement L (également appelé soute). L'appui du galet sur la surface de came permet ainsi de développer correctement le système articulé, avec une très faible dérive de trajectoire. La plage angulaire concernée est de l'ordre d'une vingtaine de degrés. Après cette position, le galet 246 roule sur une autre portion 260.2 de la surface de came 260, en continuant à développer le système articulé, c'est à dire en poursuivant la sortie de l'amortisseur. Lorsque l'on a atteint la position II, ce qui correspond à une plage angulaire d'environ 45°, la masse de l'amortisseur devient motrice, et le galet 246 quitte la came 260, et ce jusqu'à ce que la position III soit atteinte, avec les points d'articulation 242, 244 et 223 alignés.

La coopération entre l'appendice latéral 245 et les portions 260.1 et 260.2 de la came fixe 260 permettent ainsi d'assurer la sortie normale de l'amortisseur en cas de défaillance de la bielle élastique à seuil 225.

Lorsque l'atterrisseur est en position train bas, conformément à la figure 8, le contact entre les roues et le sol transmet un effort de compression sur l'alignement 241, 250. L'équilibre instable de cet alignement peut être détruit avec un déplacement de l'articulation 244 en direction de la paroi 203.1 du caisson 203 (si aucun ergot de butée n'a été prévu sur l'un des bras concernés), et dans ce cas (avec ou sans ergot de butée) le verrouillage est obtenu naturellement. Par contre, si l'articulation 244 se déplace dans l'autre sens, alors le galet 246 vient au contact d'une portion 260.3 de la surface de came 260, en formant une butée positive qui verrouille l'amortisseur, après un enfoncement très léger de celui-ci, ce qui permet de conserver pratiquement la totalité de la course disponible pour absorber de l'énergie. On est ainsi capable de verrouiller en sécurité l'amortisseur de jambe allongée en position train bas.

La came fixe 260 comporte ainsi successivement une première portion 260.1 et 260.2 servant à assurer le début de la sortie de l'amortisseur, et une seconde portion 260.3 formant butée positive pour assurer le verrouillage de cet amortisseur (repoussé) en position train bas, lors du contact avec le sol. La première portion est ici de forme générale concave, en étant par exemple constituée de deux tronçons rectilignes 260.1 et 260.2 se raccordant par une portion arrondie, la seconde portion 260.3 est quant à elle de forme générale convexe, en étant par exemple circulaire ou anguleuse. La forme précise de la surface de came 260 sera dans la pratique calculée en fonction de la trajectoire recherchée, pour obtenir une trajectoire aussi proche que possible de la trajectoire normale en cas de déficience de la bielle élastique à seuil. Il convient de noter qu'en cas de frottement excessif empêchant que la masse motrice de l'amortisseur parvienne à assurer la sortie des roues de l'atterrisseur, le galet reste alors au contact de la came, ce qui permet d'arriver jusqu'à la position intermédiaire Il avec un guidage complet. On parvient donc ainsi encore à assurer la sortie de l'amortisseur.

L'invention n'est pas limitée au mode de réalisation qui vient d'être décrit, mais englobe au contraire toute variante reprenant, avec des moyens équivalents, les caractéristiques essentielles énoncées plus haut.

En particulier, l'atterrisseur à raccourcissement de jambe sera applicable à tous types d'atterrisseurs, notamment à des atterrisseurs avant ou à des atterrisseurs principaux.

## Revendications

1. Atterrisseur relevable à raccourcissement de jambe, comportant une jambe articulée sur une structure d'avion, constituée d'un caisson dans lequel est logé un amortisseur se composant principalement d'une tige coulissante et d'une tige plongeuse d'amortisseur, ainsi qu'un système articulé reliant cette tige plongeuse au caisson en étant commandé par une bielle élastique à seuil fixée sur la structure d'avion, de façon à tirer l'amortisseur lors du relevage de la jambe et à repousser ledit amortisseur lors de la descente de ladite jambe, caractérisé en ce que le système articulé (230) comporte deux bras (240,250) formant un alignement, avec un premier bras (240) articulé sur la tige plongeuse d'amortisseur (205) et présentant un appendice latéral (245) dont l'extrémité libre (246) peut coopérer avec une came fixe (260) solidaire de la structure d'avion, et un second bras (250) articulé sur le caisson (203), ainsi qu'un levier (251) solidaire en rotation de ce second bras (250) et relié à la bielle à seuil (225), ledit appendice latéral et ladite came fixe étant agencés pour intervenir en sécurité en assurant la sortie de l'amortisseur et le verrouillage dudit amortisseur en position train bas.

2. Atterrisseur selon la revendication 1, caractérisé en ce que l'appendice latéral (245) du premier bras (240) est agencé au voisinage de l'articulation entre les deux bras (240,250).

3. Atterrisseur selon la revendication 2, caractérisé en ce que l'appendice latéral (245) s'étend dans le plan de l'alignement formé par les deux bras (240,250), dans une direction sensiblement perpendiculaire à la direction générale du premier bras (240).

4. Atterrisseur selon l'une des revendications 1 à 3, caractérisé en ce que l'extrémité libre de l'appendice latéral (245) du premier bras (240) est pourvue d'un galet (246) qui roule sur la came fixe (260) lors d'une intervention en sécurité.

5. Atterrisseur selon l'une des revendications 1 à 4, caractérisé en ce que la came fixe (260) comporte successivement une première portion (260.1 , 260.2) servant à assurer le début de la sortie de l'amortisseur, et une seconde portion (260.3) formant butée positive pour assurer le verrouillage dudit amortisseur en position train bas lors du contact avec le sol.

6. Atterrisseur selon la revendication 5, caractérisé en ce que la première portion (260.1 , 260.2) de la came fixe (260) est de forme générale concave, tandis que la seconde portion (260.3) de ladite came est de forme générale convexe.

7. Atterrisseur selon l'une des revendications 1 à 6, caractérisé en ce que le second bras (250) et le levier (251) qui lui est couplé sont disposés de part et d'autre d'un appendice (224) du caisson associé à leur articulation sur ledit caisson.

8. Atterrisseur selon la revendication 7, caractérisé en ce que le second bras (250) et le levier (251) associé s'étendent d'un même côté de leur articulation.
